# EUROPÄISCHE PATENTANMELDUNG

(11) **EP 0 738 884 A2**
(43) Veröffentlichungstag der Anmeldung: **23.10.1996**
(21) Anmeldenummer: 96102171.4
(22) Anmeldetag: 14.02.1996
(51) Int. Cl.: G01L 1/22, G01L 1/26

(54) **Vorrichtung zur Kraftmessung mittels eines elektromechanischen Kraftaufnehmers**

(30) Priorität: 22.04.1995 DE 19514916
(71) Anmelder: GTM GASSMANN THEISS MESSTECHNIK GMBH, D-64342 Seeheim-Jugenheim (DE)
(72) Erfinder: Müller, Klaus, D-67346 Speyer (DE); Gassmann, Helmut, Dr., D-64342 Seeheim-Jugenheim (DE)
(74) Vertreter: Katscher, Helmut, Dipl.-Ing.

(57) **Zusammenfassung**

Bei einer Vorrichtung zur Kraftmessung mittels eines elektromechanischen Kraftaufnehmers (1) erfolgt die Krafteinleitung aus einer Standfläche (8). Der Kraftaufnehmer (1) ist von den bei der Belastung auftretenden radialen Verformungen der Standfläche (8) entkoppelt. Für eine aktive Entkoppelung werden die auftretenden radialen Verformungen der Standfläche (8) gemessen und zur Kompensation des dadurch verursachten Fehlers herangezogen. Bei einer passiven Entkoppelung erfolgt die Krafteinleitung in den Kraftaufnehmer (1) über einen Zwischenkörper (7) in der Weise, daß sich der Krafteinleitungsring (4) des Kraftaufnehmers (1) am Zwischenkörper (7) in einem Bereich abstützt, der von den radialen Verformungen weitestgehend unbeeinflußt ist.

## Beschreibung

Die Erfindung betrifft eine Vorrichtung zur Kraftmessung mittels eines elektromechanischen Kraftaufnehmers, wobei die Krafteinleitung aus einer Standfläche erfolgt.

Derartige Vorrichtungen sind in zahlreichen Ausführungen bekannt. Elektromechanische Kraftaufnehmer, die auch als Kraftmeßdosen bezeichnet werden, weisen üblicherweise einen Verformungskörper auf, der mit Dehnungsmeßstreifen, beispielsweise in Form von Dehnungsmeßspiralen, versehen ist, die zu einer Brückenschaltung zusammengeschaltet sind. Die Brückenschaltung liefert ein Ausgangssignal, das der Kraft entspricht, die in den Verformungskörper eingeleitet wurde.

Besonders hohe Anforderungen hinsichtlich der Meßgenauigkeit und Unempfindlichkeit gegenüber Störgrößen werden an Kraftaufnehmer gestellt, die als Kraftvergleichsnormale zur Eichung von Prüfmaschinen eingesetzt werden. Da solche Kraftvergleichsnormale in unterschiedlichen Prüfmaschinen eingesetzt werden, deren zur Aufnahme der Kraftvergleichsnormale bestimmte Standflächen unterschiedlich beschaffen sein können und sich bei Belastung unterschiedlich verformen, ist es zur Einhaltung der geforderten hohen Meßgenauigkeit solcher Kraftvergleichsnormale erforderlich, die Krafteinleitung so durchzuführen, daß aus der Standfläche herrührende Störungen ohne wesentlichen Einfluß auf die Messung bleiben. Diesem Zweck dient die erfindungsgemäße Vorrichtung.

Aufgabe der Erfindung ist es daher, eine Vorrichtung der eingangs genannten Gattung so auszubilden, daß das Meßergebnis weitestgehend unabhängig von den jeweiligen Einbaubedingungen ist. Insbesondere sollen Fehlereinflüsse durch Unebenheiten oder unter Belastung auftretende Verformungen der Standfläche vermieden werden.

Diese Aufgabe wird erfindungsgemäß dadurch gelöst, daß der Kraftaufnehmer von bei der Belastung auftretenden radialen Verformungen der Standfläche entkoppelt ist. Die Erfindung beruht auf der Erkenntnis, daß sowohl Unebenheiten der Standfläche als auch belastungsbedingte Verformungen der Standfläche zu Radialverformungen bei der Krafteinleitung in den Kraftaufnehmer führen, die Meßfehler verursachen. Durch die Entkoppelung des Kraftaufnehmers von solchen, unterschiedlich verursachten radialen Verformungen der Standfläche wird erreicht, daß diese ohne Einfluß auf das Meßergebnis bleiben. Die Entkoppelung des Kraftaufnehmers von radialen Verformungen kann aktiv oder passiv erfolgen. Bei der aktiven Entkoppelung wird zugelassen, daß die auftretenden radialen Verformungen auf den Kraftaufnehmer einwirken; die radialen Verformungen werden jedoch gemessen, und das Meßergebnis wird zur Kompensation des durch die radialen Verformungen verursachten Fehlers herangezogen.

Gemäß einer vorteilhaften Ausführung der Erfindung ist daher vorgesehen, daß am Krafteinleitungsring des Kraftaufnehmers Dehnungsmeßstreifen zur Erfassung der radialen Verformung angebracht sind, die zu einer Brückenschaltung zusammengeschaltet sind, deren Ausgangssignale zur Fehlerkompensation des Meßsignals des Kraftaufnehmers dienen.

Stattdessen kann auch vorgesehen sein, daß an einem Aufstellring des Kraftaufnehmers Dehnungsmeßstreifen zur Erfassung der radialen Verformung angebracht sind, die ebenfalls zu einer Brückenschaltung zusammengeschaltet sind, deren Ausgangssignale zur Fehlerkompensation des Meßsignals des Kraftaufnehmers dienen.

Gemäß einer anderen Ausführungsform der Erfindung, bei der eine passive Entkoppelung des Kraftaufnehmers von radialen Verformungen erfolgt, ist vorgesehen, daß die Krafteinleitung in den Kraftaufnehmer über einen die radialen Verformungen der Standfläche aufnehmenden Zwischenkörper in der Weise erfolgt, daß der Krafteinleitungsring des Kraftaufnehmers sich am Zwischenkörper in einem Bereich abstützt, der von den radialen Verformungen der Standfläche weitestgehend unbeeinflußt ist.

Gemäß einer vorteilhaften Ausführungsform ist vorgesehen, daß der Zwischenkörper eine elastische Zwischenschicht aufweist. Radiale Verformungen der Standfläche werden zwar auf den hierzu benachbarten Teil des Zwischenkörpers übertragen. Die elastische Zwischenschicht verhindert aber weitestgehend eine Weiterleitung dieser radialen Verformungen in denjenigen Teil des Zwischenkörpers, auf dem der Krafteinleitungsring des Kraftaufnehmers ruht.

Der Zwischenkörper kann auch eine Gleitschicht aufweisen, die ebenso wie die elastische Zwischenschicht eine Übertragung der radialen Verformungen verhindert.

Als besonders wirksam hat sich eine Ausführungsform des Zwischenkörpers erwiesen, der sowohl eine elastische Zwischenschicht als auch eine Gleit-Zwischenschicht aufweist.

Eine andere, im Rahmen der Erfindung liegende Maßnahme zur passiven Entkoppelung des Kraftaufnehmers von radialen Verformungen der Standfläche besteht darin, daß sich der Kraftaufnehmer im Bereich der neutralen Faser des Zwischenkörpers abstützt. Bei der belastungsbedingten Verformung des Zwischenkörpers bildet sich in Abhängigkeit vom Querschnittsprofil des Zwischenkörpers eine üblicherweise als neutrale Faser bezeichnete Fläche des Zwischenkörpers heraus, die dadurch definiert ist, daß sie keine radialen Verformungen erfährt, während in allen anderen Bereichen des Zwischenkörpers entweder radiale Dehnungen oder radiale Stauchungen auftreten. Legt man die den Krafteinleitungsring des Kraftaufnehmers tragende Fläche des Zwischenkörpers in diese neutrale Faser, so werden bei der Belastung keine radialen Verformungen auf den Kraftaufnehmer übertragen.

Schließlich besteht eine weitere Maßnahme zur passiven Entkoppelung des Kraftaufnehmers von radialen Verformungen der Standfläche darin, daß der Zwischenkörper die Standfläche mit einer mittigen konvexen Krafteinleitungsfläche berührt. Diese mittige Krafteinleitungsfläche ist weitestgehend frei von radialen Verformungen.

Nachfolgend werden Ausführungsbeispiele der Erfindung näher erläutert, die in der Zeichnung dargestellt sind. Es zeigt:
Fig. 1 in einer Seitenansicht und teilweise im senkrechten Schnitt eine als Kraftvergleichsnormal dienende Vorrichtung zur Kraftmessung mit einem Kraftaufnehmer und einem ringförmigen Zwischenkörper,
Fig. 2 einen vergrößerten Teilschnitt im Bereich des Krafteinleitungsrings des Kraftaufnehmers und des ringförmigen Zwischenkörpers,
Fig. 3 ein vereinfachtes Schaltbild der bei der Vorrichtung nach Fig. 2 eingesetzten Dehnungsmeßstreifen,
Fig. 4 ein anderes vereinfachtes Schaltbild der bei der Vorrichtung nach Fig. 3 eingesetzten Dehnungsmeßstreifen,
Fig. 5 in einem Teilschnitt ähnlich der Fig. 2 eine abgewandelte Ausführungsform des Zwischenkörpers,
Fig. 6 in einem Teilschnitt entsprechend der Fig. 5 eine weitere Ausführungsform des Zwischenkörpers,
Fig. 7-10 vereinfachte Darstellungen unterschiedlicher Zwischenkörper zur Abstützung der Kraftaufnehmer jeweils im Bereich der neutralen Faser, und
Fig. 11 in einer Seitenansicht und teilweise im Schnitt eine andere Vorrichtung zur Kraftmessung mit mittiger Krafteinleitung in einen Zwischenkörper.

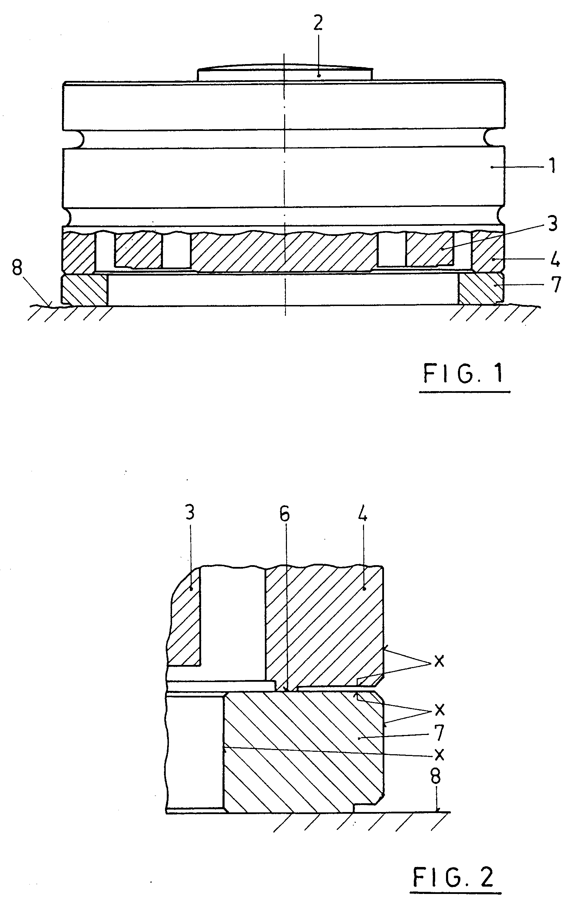

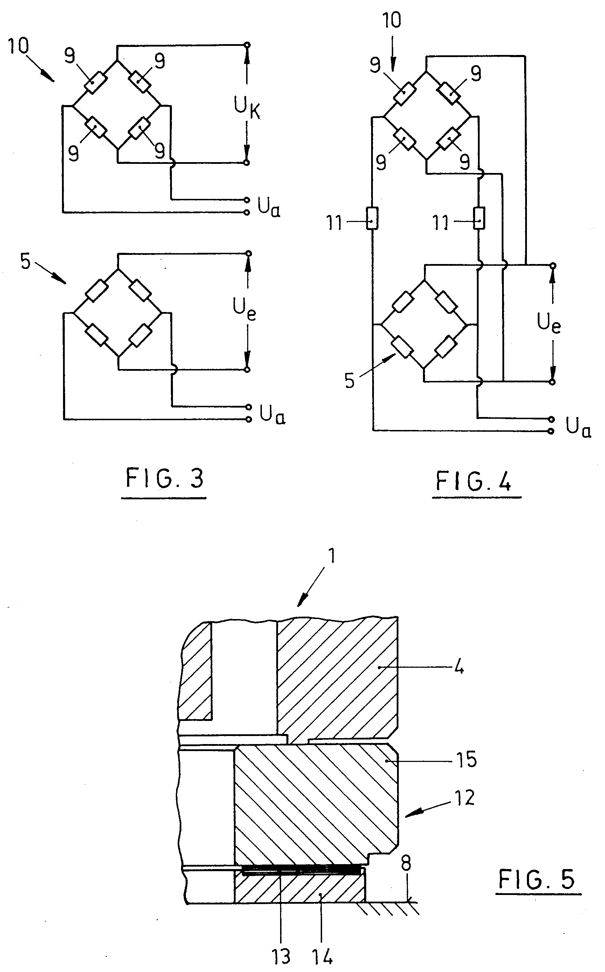

In Fig. 1 ist ein elektromechanischer Kraftaufnehmer 1 dargestellt, der einen zentralen oberen Krafteinleitungskörper 2, einen als Biegering ausgeführten Verformungskörper 3 und einen äußeren Krafteinleitungsring 4 aufweist. Der Verformungskörper 3 ist mit (nicht dargestellten) Dehnungsmeßstreifen, vorzugsweise in Form von Dehnungsmeßspiralen, bestückt, die zu einer in Fig. 3 gezeigten Brückenschaltung 5 in herkömmlicher Weise zur Kraftmessung zusammengeschaltet sind.

Wie in Fig. 3 vergrößert dargestellt ist, stützt sich der Krafteinleitungsring 4 über einen nach unten vorspringenden, umlaufenden Stützring 6 auf einem ringförmigen Zwischenkörper 7 ab, der auf einer Standfläche 8 ruht. Diese Standfläche 8 kann beispielsweise die Oberseite einer Traverse einer Prüfmaschine sein.

Wird die in Fig. 1 gezeigte Vorrichtung mit der zu messenden Kraft beaufschlagt, so erfolgt unvermeidbar eine Verformung der Standfläche 8. Dies führt dazu, daß die Standfläche 8 in dem vom Zwischenkörper 7 berührten Bereich radiale Verformungen ausführt, deren Größe unter anderem von der eingeleiteten Kraft abhängt. Diese radialen Verformungen 8 bewirken auch radiale Verformungen an der Oberseite des Zwischenkörpers 7, die sich über den Ring 6 auf den Krafteinleitungsring 4 und schließlich auf den Verformungskörper 3 übertragen, wo sie zu einer Störung des Meßergebnisses führen.

Deshalb sind am Krafteinleitungsring 4 oder am ringförmigen Zwischenkörper 7 Dehnungsmeßstreifen 9 angebracht, die in einer Brückenschaltung 10 zusammengeschaltet sind, wie in Fig. 3 gezeigt. Die Dehnungsmeßstreifen 9 können beispielsweise an den in Fig. 2 mit "x" bezeichneten Stellen des Krafteinleitungsrings 4 oder des ringförmigen Zwischenkörpers 7 angebracht werden, nämlich am äußeren Umfang, am inneren Umfang oder an den einander zugekehrten Stirnflächen der Ringe 4 und/oder 7.

Das aus der Brückenschaltung 5 nach Fig. 3 abgegriffene Meßsignal Ue wird mit dem an der Brückenschaltung 10 abgegriffenen, der radialen Verformung entsprechenden Kompensationssignal Uk in einer (nicht dargestellten) Auswerteschaltung kompensiert. Ua stellt in Fig. 3 jeweils die Brückenspeisespannung dar.

Eine demgegenüber abgewandelte Ausführungsform der Brückenschaltungen zur Kompensation der radialen Verformung zeigt Fig. 4. Hierbei sind die beiden vorher beschriebenen Brückenschaltungen 5 und 10 zusammengeschaltet. Die Gewichtung der beiden Ausgangssignale der beiden Brückenschaltungen 9 und 5 erfolgt über zwischengeschaltete Widerstände 11. Durch die Wahl der Größe dieser Widerstände 11 wird festgelegt, in welchem Maße das von der radialen Verformung abhängige Kompensationssignal der Brückenschaltung 10 das Meßsignal der Brückenschaltung 5 beeinflußt.

Die bisher beschriebenen Ausführungsformen machen von der Möglichkeit einer aktiven Entkoppelung des Kraftaufnehmers 1 von radialen Verformungen der Standfläche 8 Gebrauch. Nachfolgend werden Beispiele für eine passive Entkoppelung beschrieben.

Beim Ausführungsbeispiel nach Fig. 5 weist der den Krafteinleitungsring 4 des Kraftaufnehmers 1 tragende ringförmige Zwischenkörper 12 eine elastische Zwischenschicht 13 auf, beispielsweise eine Gummischicht. Die elastische Zwischenschicht 13 trennt ein auf der Standfläche 8 ruhendes Ringunterteil 14 des Zwischenkörpers 12 von einem den Kraftaufnehmer 1 tragenden Ringoberteil 15. Die von der Standfläche 8 ausgeführten radialen Verformungen können sich nur auf das Ringunterteil 14 übertragen; das Ringoberteil 15 und somit auch der Krafteinleitungsring 4 des Kraftaufnehmers 1 sind von solchen radialen Verformungen entkoppelt.

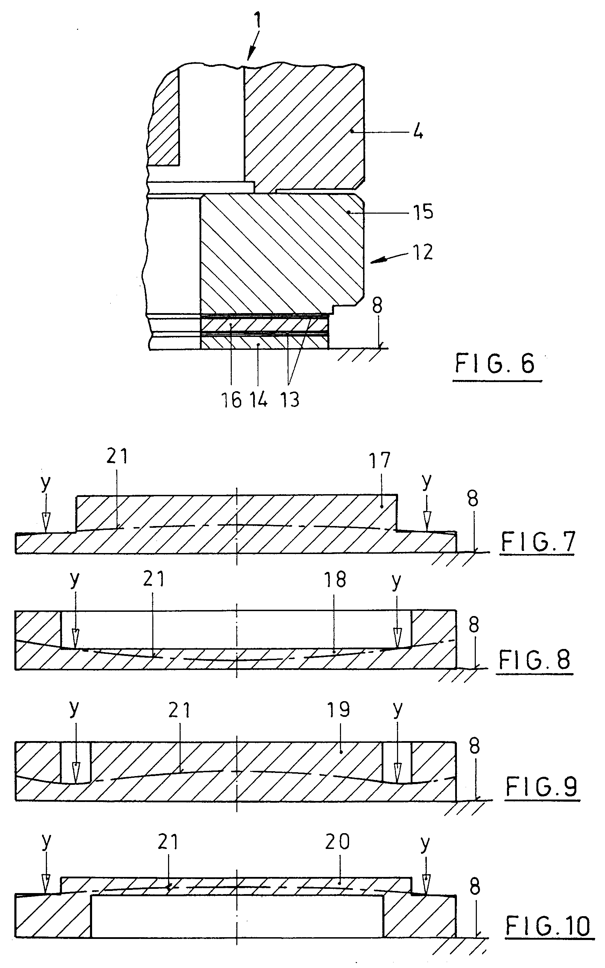

Das Ausführungsbeispiel nach Fig. 6 unterscheidet sich hiervon nur dadurch, daß der ringförmige Zwischenkörper 12 zum Zwecke einer noch vollständigeren Entkoppelung übereinander zwei elastische Zwischenschichten 13 aufweist, zwischen denen ein Zwischenring 16 angeordnet ist.

Anstelle der in den Fig. 5 und 6 dargestellten elastischen Zwischenschichten 13 können auch Gleit-Zwischenschichten vorgesehen werden, die jeweils eine radiale Gleitbewegung ermöglichen. Beim Beispiel nach Fig. 6 kann auch eine der beiden elastischen Zwischenschichten 13 durch eine solche Gleit-Zwischenschicht ersetzt werden.

In den Fig. 7-10 sind unterschiedliche Zwischenkörper 17, 18, 19 und 20 dargestellt, die jeweils auf der Standfläche 8 ruhen und an den jeweils mit "y" bezeichneten Stellen den (dort nicht dargestellten) Kraftaufnehmer 1 tragen. Mit einer strichpunktierten Linie ist in den Fig. 7-10 jeweils der - abhängig von der jeweiligen Querschnittsgestaltung unterschiedliche - Verlauf der neutralen Faser 21 dargestellt. Die Abstützung des Kraftaufnehmers an den Stellen y erfolgt jeweils im Bereich der neutralen Faser 21. Die Zwischenkörper 17-20 sind durch Absätze am äußeren Rand (Fig. 7 und 10) oder durch Vertiefungen (Fig. 8und 9) jeweils so gestaltet, daß die neutrale Faser 21 an den Stellen y an oder zumindest sehr nahe an der Oberfläche verläuft. Dort erfolgt dann die Abstützung des Kraftaufnehmers 1.

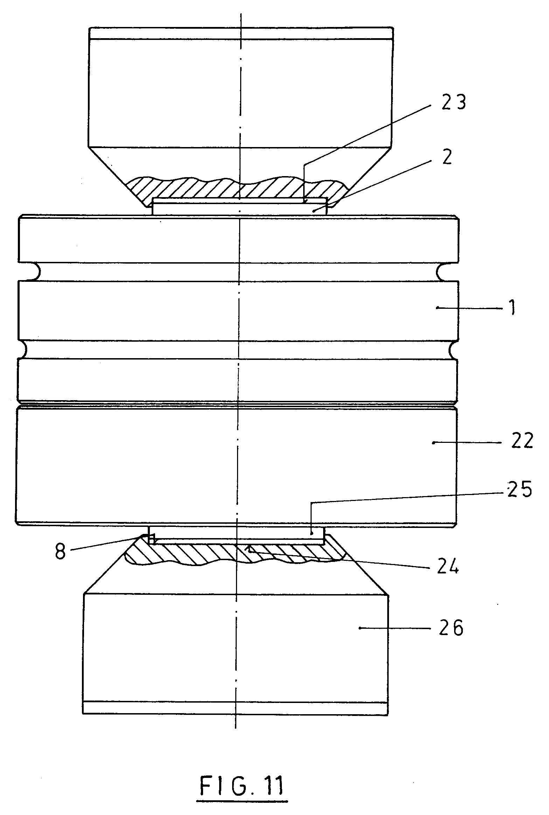

Bei dem in Fig. 11 dargestellten Ausführungsbeispiel erfolgt die Krafteinleitung sowohl in den zentralen oberen Krafteinleitungskörper 2 des Kraftaufnehmers 1 als auch in den Zwischenkörper 22 über eine mittige, konvexe Krafteinleitungsfläche 23 bzw. 24. Beim Beispiel nach Fig. 11 wird die mittige konvexe Krafteinleitungsfläche 24 des Zwischenkörpers 22 von einem nach unten vorspringenden Zapfen 25 gebildet. Die Standfläche 8 ist an einem Stützkörper 26 ausgebildet. Radiale Verformungen der Standfläche 8 oder einer den Stützkörper 26 tragenden Fläche werden hierbei nicht auf den Zwischenkörper 22 übertragen.

## Patentansprüche

1. Vorrichtung zur Kraftmessung mittels eines elektromechanischen Kraftaufnehmers (1), wobei die Krafteinleitung aus einer Standfläche (8)erfolgt, dadurch gekennzeichnet, daß der Kraftaufnehmer (1) von bei der Belastung auftretenden radialen Verformungen der Standfläche (8) entkoppelt ist.

2. Vorrichtung nach Anspruch 1, dadurch gekennzeichnet, daß am Krafteinleitungsring (4) des Kraftaufnehmers (1) Dehnungsmeßstreifen (9) zur Erfassung der radialen Verformungen der Standfläche (8) angebracht sind, die zu einer Brückenschaltung (10) zusammengeschaltet sind, deren Ausgangssignale (Uk) zur Fehlerkompensation des Meßsignals (Ue) des Kraftaufnehmers (1) dienen.

3. Vorrichtung nach Anspruch 1, dadurch gekennzeichnet, daß an einem Zwischenkörper (7) des Kraftaufnehmers (1) Dehnungsmeßstreifen (9) zur Erfassung der radialen Verformungen der Standfläche (8) angebracht sind, die zu einer Brückenschaltung (10) zusammengeschaltet sind, deren Ausgangssignale (Uk) zur Fehlerkompensation des Meßsignals (Ue) des Kraftaufnehmers (1) dienen.

4. Vorrichtung nach Anspruch 1, dadurch gekennzeichnet, daß die Krafteinleitung in den Kraftaufnehmer (1) über einen die radialen Verformungen der Standfläche (8) aufnehmenden Zwischenkörper (12, 17-20, 22) in der Weise erfolgt, daß der Krafteinleitungsring (4) des Kraftaufnehmers (1) sich am Zwischenkörper (12, 17-20, 22) in einem Bereich abstützt, der von den radialen Verformungen der Standfläche (8) weitestgehend unbeeinflußt ist.

5. Vorrichtung nach Anspruch 4, dadurch gekennzeichnet, daß der Zwischenkörper (12) eine elastische Zwischenschicht (13) aufweist.

6. Vorrichtung nach Anspruch 4, dadurch gekennzeichnet, daß der Zwischenkörper (12) eine Gleit-Zwischenschicht aufweist.

7. Vorrichtung nach den Ansprüchen 5 und 6, dadurch gekennzeichnet, daß der Zwischenkörper (12) sowohl eine elastische Zwischenschicht (13) als auch eine Gleit-Zwischenschicht aufweist.

8. Vorrichtung nach Anspruch 4, dadurch gekennzeichnet, daß sich der Kraftaufnehmer (1) im Bereich der neutralen Faser (21) des Zwischenkörpers (17-20) abstützt.

9. Vorrichtung nach Anspruch 4, dadurch gekennzeichnet, daß der Zwischenkörper (22) die Standfläche (8) mit einer mittigen konvexen Krafteinleitungsfläche (24) berührt.
